# FASCICULE DE BREVET EUROPEEN

(11) **EP 3 172 092 B1**
(45) Date de publication et mention de la délivrance du brevet: **28.03.2018**
(21) Numéro de dépôt: 15739288.7
(22) Date de dépôt: 20.07.2015
(51) Int. Cl.: B60R 25/021

(54) **ANTIVOL POUR VEHICULE AUTOMOBILE**
DIEBSTAHLSICHERUNG FÜR KRAFTFAHRZEUG
ANTITHEFT FOR AUTOMOTIVE VEHICLE

(30) Priorité: 23.07.2014 FR 1457092
(43) Date de publication de la demande: 31.05.2017
(73) Titulaire: U-Shin France, 94046 Créteil Cedex (FR)
(72) Inventeur: RENAUD, Jean-Pierre, F-94046 Creteil Cedex (FR); DESARMENIEN, Alain, F-94046 Creteil Cedex (FR)
(74) Mandataire: Gaillarde, Frédéric F. Ch.
(86) Numéro de dépôt international: PCT/EP2015/066584
(87) Numéro de publication internationale: WO 2016/012415

(56) Documents cités:
- EP-A1- 1 422 114
- CN-U- 201 961 277
- FR-A- 1 605 119
- FR-A1- 2 909 951
- GB-A- 2 061 370

## Description

### DOMAINE TECHNIQUE

La présente invention concerne un antivol pour véhicule automobile destiné, en particulier, à commander le verrouillage d'une colonne de direction du véhicule lors de l'allumage du véhicule automobile.

### ARRIÈRE-PLAN TECHNOLOGIQUE

Il est connu d'utiliser un antivol pour véhicule automobile, du type comportant :
- un stator,
- un barillet destiné à recevoir une clé compatible permettant au barillet de tourner par rapport au stator entre une première position et une seconde position,
- un rotor destiné à tourner par rapport au stator entre une première position et une seconde position,
- une pièce d'activation d'un système de blocage d'une colonne de direction du véhicule automobile, la pièce d'activation étant destinée à se déplacer entre une position de blocage dans laquelle le système de blocage bloque la colonne de direction à une position de déblocage dans laquelle le système de blocage laisse libre la colonne de direction,
le barillet étant destiné, lorsqu'il tourne de sa première position à sa seconde position, à entraîner le rotor de sa première position à sa seconde position,
le rotor étant destiné, lorsqu'il tourne de sa première position à sa seconde position, à pousser la pièce d'activation de sa position de blocage à sa position de déblocage, voir GB2061370A. Dans cet antivol connu, il est généralement prévu un ressort de rappel destiné à rappeler la pièce d'activation vers sa position de blocage. Il en résulte un effort de frottement important entre le rotor et la pièce d'activation lors de l'entraînement de la pièce d'activation par le rotor. Cela peut entraîner une usure importante de la pièce d'activation et du rotor et/ou des sur-couples pour l'utilisateur, donc des détériorations prématurées des performances du produit.

L'invention a pour but de proposer un antivol pour véhicule automobile réduisant les risques d'usure et de surcouple.

### RÉSUMÉ DE L'INVENTION

À cet effet, il est proposé un antivol pour véhicule automobile du type précité, caractérisé en ce que le rotor est en outre destiné, lorsqu'il tourne de sa seconde position à sa première position, à pousser la pièce d'activation de sa position de déblocage à sa position de blocage.

Grâce à l'invention, le ressort de rappel n'est plus nécessaire. L'absence de compression d'un ressort permet de diminuer l'effort de contact entre le rotor et la pièce d'activation.

De façon optionnelle, le rotor présente une rainure délimitée par deux parois latérales, dans lequel la pièce d'activation présente un pion inséré dans la rainure, et le pion est destiné, d'une part, à être poussé par la première paroi latérale de la rainure pour déplacer la pièce d'activation de sa position de blocage à sa position de déblocage, et, d'autre part, à être poussé par la seconde paroi latérale de la rainure pour déplacer la pièce d'activation de sa position de déblocage à sa position de blocage.

De façon optionnelle également, l'antivol pour véhicule automobile comporte en outre un système de rappel du rotor vers sa première position.

De façon optionnelle également, l'antivol pour véhicule automobile comporte en outre un système de retenue du rotor, le système de retenue étant destiné à retenir le rotor dans sa seconde position lorsque le barillet se déplace de sa seconde position à sa première position et qu'une clé est reçue dans le barillet.

De façon optionnelle également, le système de retenue comporte : - une encoche ménagée dans le rotor ; - un levier destiné à prendre une position engagée dans l'encoche pour empêcher le rotor de tourner de sa seconde position à sa première position et une position désengagée de l'encoche pour permettre au rotor de se déplacer de sa seconde position à sa première position ; - un palpeur destiné à être déplacé d'une première position à une seconde position par une clé, lors de l'insertion de la clé dans le barillet, et à se déplacer de sa seconde position à sa première position lors du retrait de la clé hors du barillet ; le palpeur dans sa première position permettant au levier de prendre sa position désengagée et le palpeur étant destiné, lors de son déplacement de sa première position à sa seconde position, à déplacer le levier en direction de sa position engagée.

De façon optionnelle également, le système de retenue comporte en outre un système de rappel du levier vers sa position désengagée.

De façon optionnelle également, l'antivol pour véhicule automobile comporte en outre un système d'indexage destiné à maintenir le barillet dans sa seconde position lorsque le rotor est dans sa seconde position.

De façon optionnelle également, l'antivol pour véhicule automobile comporte en outre un dispositif d'alimentation électrique comportant un système pour détecter lorsque le barillet est dans sa première position et lorsque le barillet est dans sa deuxième position, le dispositif d'alimentation électrique étant destiné à couper l'alimentation électrique d'organes électriques du véhicule automobile lorsque le barillet est détecté dans sa première position et à alimenter électriquement ces organes électriques lorsque le barillet est détecté dans sa seconde position.

### DESCRIPTION DES FIGURES

Un mode de réalisation de l'invention va à présent être décrit à titre d'exemple uniquement, en référence aux figures suivantes.
Les figures 1 et 2 sont des vues éclatées d'un antivol selon l'invention.
Les figures 3 à 10 sont des vues en trois dimensions de l'antivol des figures 1 et 2, dans différentes configurations de fonctionnement.

Chaque caractéristique décrite selon ce mode de réalisation est isolable du reste des caractéristiques décrites dans ce mode de réalisation tout en restant couverte par le jeu de revendications ci-après.

### DESCRIPTION DÉTAILLÉE

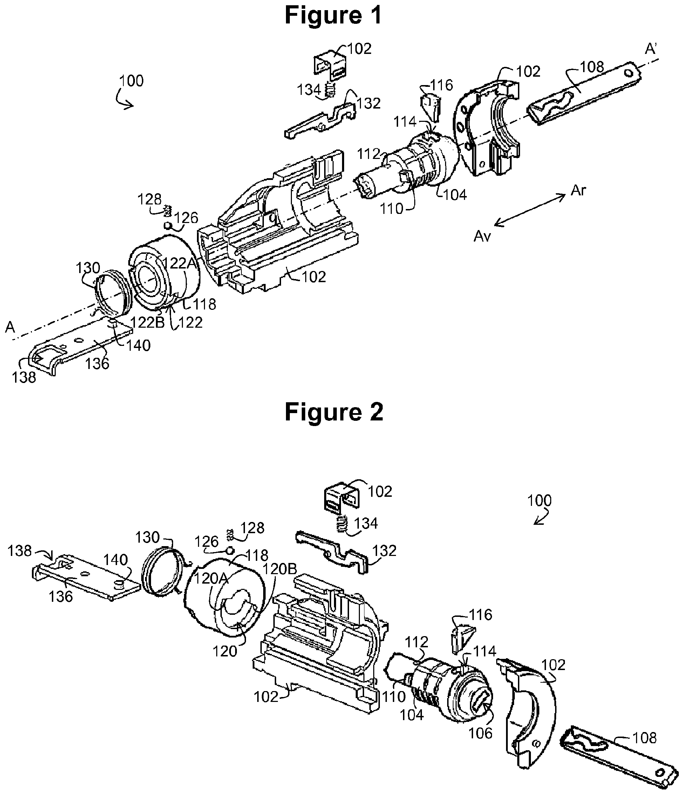

En référence aux figures 1 à 10, un antivol 100 selon l'invention pour véhicule automobile va à présent être décrit. L'antivol 100 est destiné à commander le verrouillage d'une colonne de direction du véhicule automobile et le démarrage d'un moteur de ce véhicule automobile.

En référence aux figures 1 et 2, l'antivol 100 comporte un stator 102 de forme générale cylindrique creuse (dans l'exemple décrit, le stator comporte trois parties solidaires, toutes désignées par la même référence 102).

L'antivol 100 comporte en outre un barillet 104 monté tournant dans une partie arrière du stator 102 autour d'un axe AA' parallèle à une direction avant/arrière Av-Ar. Le barillet 104 est muni à l'arrière d'une fente 106 d'introduction d'une clé 108.

Le barillet 104 reçoit des paillettes (non représentées) de détection de la clé. Ainsi, lorsque la clé 108 est compatible avec le barillet 104, les paillettes sont destinées à se désengager du stator 102 de sorte que le barillet 104 puisse tourner dans le stator 102 autour de l'axe AA'. Au contraire, si la clé 108 n'est pas compatible avec le barillet 104 ou bien en l'absence de clé, les paillettes sont destinées à rester engagées dans le stator 102 de sorte que le barillet 104 soit bloqué en rotation par rapport au stator 102.

Le barillet 104 est destiné à être tourné par la rotation de la clé 108 depuis une première position STOP jusqu'à une deuxième position MARCHE, puis jusqu'à une troisième position DEMARRAGE.

Le barillet 104 est muni d'un doigt d'entraînement 110 d'un rotor qui sera décrit plus loin. Le doigt d'entraînement 110 se projette radialement depuis une face externe du barillet 104. Une empreinte 112 et une ouverture radiale 114 sont en outre ménagées dans la face externe du barillet 104.

L'antivol 100 comporte en outre un palpeur 116 s'étendant dans l'ouverture radiale 114. Le palpeur 116 est destiné à être poussé par la clé 108 lors de son introduction dans le barillet 104, d'une première position rentrée dans l'ouverture radiale 114 à une seconde position sortie dans laquelle le palpeur 114 affleure la face externe du barillet 104.

L'antivol 100 comporte en outre un rotor 118 s'étendant dans une extrémité avant du stator 102 et présentant, le long de l'axe AA', une ouverture axiale dans laquelle une partie avant du barillet 104 est insérée. Le rotor 118 est destiné à tourner par rapport au stator 102 et par rapport au barillet 104 autour de l'axe AA'.

Le rotor 118 est destiné à prendre trois positions successives ou bien deux positions, comme cela sera expliqué en détail plus loin.

Une encoche arrière 120 et une encoche avant 122 sont ménagées dans le rotor 118. L'encoche arrière 120 présente un bord droit 120A et un bord gauche 120B, et l'encoche avant 122 présente un bord droit 122A et un bord gauche 122B. L'encoche arrière 120 reçoit le doigt d'entrainement 110 du barillet 104, pour permettre au barillet 104 d'entraîner le rotor 118.

En outre, une rainure circonférentielle 124 est ménagée dans une face externe du rotor 118. La rainure 124 est délimitée par une paroi latérale avant 124A et une paroi latérale arrière 124B faisant face l'une à l'autre. La rainure 124 présente une première partie oblique s'étendant autour de l'axe AA' et vers l'arrière, et une seconde partie droite s'étendant autour de l'axe AA' mais restant à la même position le long de la direction avant/arrière. Ainsi, la rainure 124 forme un profil de came.

Par ailleurs, une ouverture radiale (non visible sur les figures) est ménagée dans rotor 118. Cette ouverture radiale présente une sortie débouchant dans l'ouverture axiale où se trouve la partie avant du barillet 104.

L'antivol 100 comporte en outre un système d'indexage du barillet 104 par rapport au stator 102. Dans l'exemple décrit, le système d'indexage comporte tout d'abord une bille d'indexage 126 insérée dans l'ouverture axiale et repoussée en direction de la sortie de l'ouverture axiale par un système de rappel 128, tel qu'un ressort. Le système d'indexage comporte en outre un système de rappel du rotor 118 vers sa première position, tel qu'un ressort. Le système d'indexage comporte en outre l'empreinte 112 dans laquelle la bille d'indexage 126 est destinée à s'engager.

L'antivol 100 comporte en outre un système de rappel 130 du rotor 118, tel qu'un ressort de rappel, destiné à rappeler le rotor 118 vers sa première position.

L'antivol 100 comporte en outre un levier 132 monté pivotant sur le stator 102. Le levier 132 présente une extrémité arrière destinée à être poussée par le palpeur 116 pour faire basculer le levier 132 dans une position engagée dans laquelle une extrémité avant du levier 132 est engagée dans l'encoche avant 122 du rotor 118.

L'antivol 100 comporte en outre un système de rappel 134 du levier 132, tel qu'un ressort de rappel, destiné à pousser le levier 132 vers une position désengagée dans laquelle l'extrémité avant du levier est désengagée de l'encoche arrière 120 du rotor 118.

L'antivol 100 comporte en outre un système de blocage (non représenté) d'une colonne de direction du véhicule automobile et une pièce d'activation 136 du système du blocage destinée à se déplacer entre une position de blocage dans laquelle le système de blocage bloque la colonne de direction et une position de déblocage dans laquelle le système de blocage laisse libre la colonne de direction.

Dans l'exemple décrit, le système de blocage comporte un pêne de blocage de la colonne de direction, tandis que la pièce d'activation 136 comporte une tirette mobile en translation par rapport au stator 102 le long de l'axe AA'. La pièce d'activation 136 est pourvue, à une extrémité avant, d'une ouverture 138 de passage du pêne de blocage pour entraîner ce dernier.

Par ailleurs, la pièce d'activation 136 est pourvue, à une extrémité arrière, d'un pion 140 inséré dans la rainure 124, pour pouvoir coopérer avec les parois latérales 124A, 124B de la rainure 124.

L'antivol 100 comporte en outre un dispositif d'alimentation électrique (non représenté) comportant un système de détection de la position du barillet 104. Le dispositif d'alimentation électrique est destiné à alimenter ou non électriquement des organes électriques du véhicule automobile en fonction de la position du barillet 104 comme cela sera expliqué par la suite.

Le fonctionnement de l'antivol 100 va à présent être écrit.

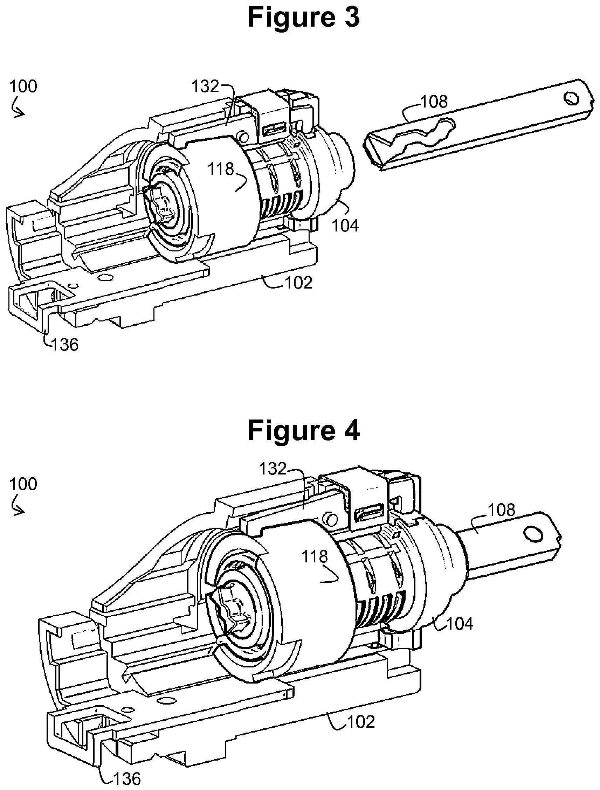

En référence à la figure 3, initialement, la clé 108 est dégagée du barillet 104. Le barillet 104 est alors dans sa première position STOP et le rotor 118 est dans sa première position. Comme le barillet 104 est dans sa première position STOP, le dispositif d'alimentation électrique n'alimente pas les organes électriques.

Le pion 140 de la pièce d'activation 136 est à l'extrémité avant de la partie oblique de la rainure 124, de sorte que la pièce d'activation est en position engagée. Par ailleurs, la bille d'indexage 126 est insérée dans l'empreinte 112.

En référence à la figure 4, un utilisateur insère alors la clé 108 dans le barillet 104.

Lors de son insertion dans le barillet 104, la clé 108 déverrouille le barillet 104 par rapport au stator 102. En outre, la clé 108 pousse le palpeur 116 pour faire passer le palpeur 116 de sa position rentrée à sa position sortie.

Lors du déplacement du palpeur 116 de sa position rentrée à sa position sortie, le palpeur 116 pousse l'extrémité arrière du levier 132. Comme le rotor 118 est dans sa première position, l'encoche avant 122 est décalée de l'extrémité avant du levier 132 de sorte que l'extrémité avant du levier 132 ne s'engage pas dans l'encoche avant 122, mais bute contre la face externe du rotor 118 de sorte que le levier 132 se déforme élastiquement.

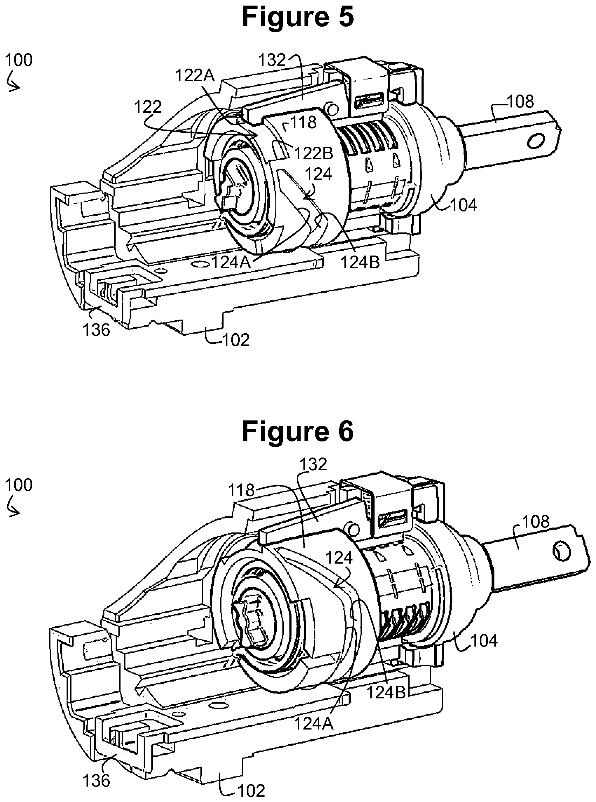

En référence à la figure 5, l'utilisateur tourne alors la clé 108 de manière à entraîner le barillet 104 de sa première position STOP à sa deuxième position MARCHE. Lorsque le barillet 104 arrive à sa deuxième position MARCHE, dans le cas de deux positions indexées, le dispositif d'alimentation électrique alimente les organes électriques.

Lors de la rotation du barillet 104 de sa première position STOP à sa deuxième position MARCHE, le doigt d'entraînement 110 est en contact avec le bord gauche 120A de l'encoche arrière 120 et pousse ainsi le rotor 118 de sa première position à sa deuxième position. Ainsi, le barillet 104 et le rotor 118 tournent en même temps, de sorte que la bille d'indexage 126 reste dans l'empreinte d'indexage 112. Le rotor 118 active le système de rappel 130 qui produit alors une force de rappel sur le rotor 118 rappelant le rotor 118 vers sa première position.

Par ailleurs, lors de la rotation du rotor 118 de sa première position à sa deuxième position, le palpeur 116 se décale de l'extrémité arrière du levier 132 et la face externe du barillet 104 glisse contre l'extrémité arrière du levier 132 de manière à maintenir le levier 132 en déformation élastique.

Lorsque le rotor 118 atteint sa deuxième position, l'encoche avant 122 arrive en face l'extrémité avant du levier 132 de sorte que l'extrémité avant du levier 132, du fait de la déformation élastique du levier 132, s'engage automatiquement dans l'encoche avant 122 du côté de du bord droit 122A de l'encoche avant 122. Le bord droit 122A de l'encoche avant 122 forme alors une buté d'arrêt de l'extrémité avant du levier 132 empêchant le rotor 118 de se déplacer de sa deuxième position à sa première position, alors que la force de rappel du système de rappel 130 cherche à le faire.

Par ailleurs, lors de la rotation du rotor 118 de sa première position à sa deuxième position, la paroi arrière 124A de la rainure 124 pousse le pion 140, qui parcourt la partie oblique de la rainure, de manière à pousser la pièce d'activation 136 de sa position de blocage à sa position de déblocage.

En référence à la figure 6, l'utilisateur tourne alors la clé 108 de manière à entraîner le barillet 104 de sa deuxième position MARCHE à sa troisième position DEMARRAGE. Lorsque le barillet 104 arrive à sa troisième position DEMARRAGE, le dispositif d'alimentation électrique alimente un démarreur du véhicule automobile.

Lors de la rotation du barillet 104 de sa deuxième position MARCHE à sa troisième position DEMARRAGE, le doigt d'entraînement 110 pousse le bord gauche 120A de l'encoche arrière 120 pour pousser le rotor 118 de sa deuxième position à sa troisième position.

Le rotor 118 active encore plus le système de rappel 130 qui continue de produire une force de rappel sur le rotor 118 rappelant le rotor 118 vers sa première position, et donc vers sa deuxième position. C'est l'effort de l'utilisateur sur la clé 108, qui est répercuté sur le barillet 104 et le rotor 118, qui permet de contrecarrer la force de rappel.

Le rotor 118 et le barillet 104 se déplacent ainsi ensemble, de sorte que la bille d'indexage 126 reste dans l'empreinte d'indexage 112.

Durant la rotation du rotor 118 de sa deuxième position à sa troisième position, l'extrémité avant du levier 132 se déplace dans l'encoche avant 122 en direction du bord droit 122A de manière à ne pas gêner la rotation du rotor 118, et le pion 140 se déplace dans la partie droite de la rainure 124 de sorte que le pion 140 n'est pas poussé par les parois latérales 124A, 124B de la rainure 124. Ainsi, la pièce d'activation 136 est maintenue dans sa position de déblocage.

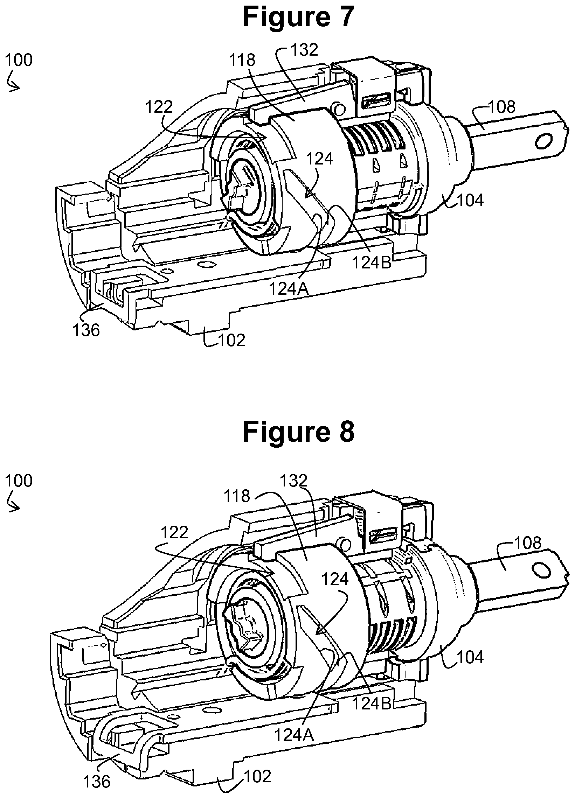

En référence à la figure 7, l'utilisateur lâche alors la clé 108, de sorte que le système de rappel 130 rappelle le rotor 118 de sa troisième position à sa deuxième position.

Durant la rotation du rotor 118 de sa troisième position à sa deuxième position, l'extrémité avant du levier 132 se déplace dans l'encoche avant 122 en direction du bord gauche 122B de manière à ne pas gêner la rotation du rotor 118, et le pion 140 se déplace dans la partie droite de la rainure 124 de sorte que le pion 140 n'est pas poussé par les parois latérales 124A, 124B de la rainure 124. Ainsi, la pièce d'activation 136 du système de blocage reste dans sa position de déblocage.

Lors de la rotation du rotor 118 de sa troisième position à sa deuxième position, le rotor 118 entraîne le barillet 104 de sa troisième position DEMARRAGE à sa deuxième position MARCHE par le fait que le bord gauche 120A de l'encoche arrière 120 pousse le doigt d'entraînement 110 fu barillet 104.

Le rotor 118 et le barillet 104 se déplacent ainsi ensemble, de sorte que la bille d'indexage 126 reste dans l'empreinte d'indexage 112.

Lorsque le rotor 118 est dans sa deuxième position, l'extrémité avant du levier 132 bute contre le bord droit 122A de l'encoche avant 122 de manière à maintenir le rotor 118 dans sa deuxième position en empêchant le retour du rotor 118 de sa deuxième position à sa première position, comme la force de rappel du système de rappel 130 cherche à le faire.

Par ailleurs, le barillet 104 est maintenu dans sa deuxième position par rapport au rotor 118 grâce à la coopération de la bille d'indexage 126 avec l'empreinte d'indexage 112

En référence à la figure 8, l'utilisateur tourne alors la clé 108 de sorte que la bille d'indexage 126 sort de l'empreinte d'indexage 112 et que le barillet 104 tourne de sa position deuxième position MARCHE à sa première position STOP. Il est également possible d'avoir une deuxième empreinte pur l'indexage à la position STOP.

Par ailleurs, l'extrémité arrière du levier 132 glisse sur la paroi extérieure du barillet de sorte que le levier 132 est maintenu dans sa position engagée. Lorsque le barillet 104 arrive à sa première position STOP, l'extrémité arrière du levier 132 est au contact du palpeur 116 qui est en position relevée de manière à maintenir le levier 132 en position engagée, et donc de manière à maintenir le rotor 118 dans sa seconde position.

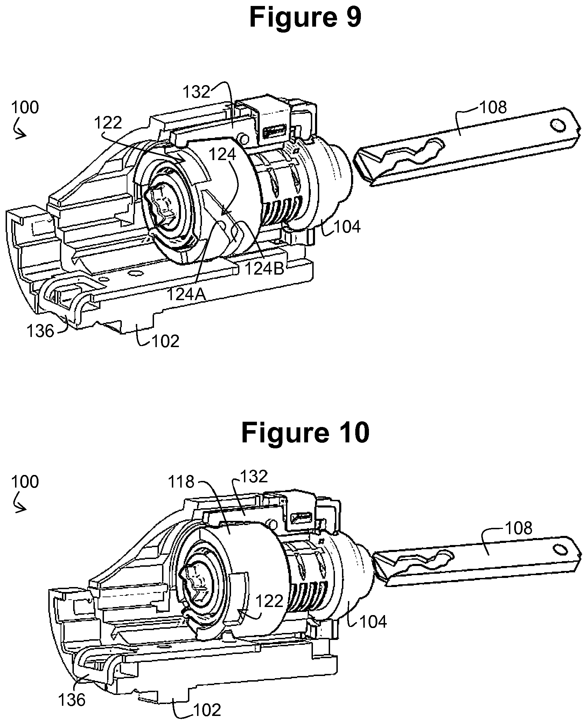

En référence à la figure 9, l'utilisateur retire alors la clé 108 du barillet 104.

Le palpeur 116 se déplace alors de sa position sortie à sa position rentrée.

Le système de rappel 134 pousse alors le levier 132 de sa position engagée à sa position dégagée. Ainsi, l'extrémité avant du levier 132 sort de l'encoche avant 122.

En référence à la figure 10, suite à la sortie du levier 132 de l'encoche avant 122, le rotor 118 tourne, sous l'effet du système de rappel 130, de sa deuxième position à sa première position.

Lors de la rotation du rotor 118 de sa deuxième position à sa première position, la paroi avant de la rainure 124B pousse le pion 140 de manière à pousser la pièce d'activation 136 de sa position de déblocage à sa position de blocage.

La présente invention n'est pas limitée au mode de réalisation décrit précédemment, mais est au contraire définie par les revendications qui suivent. Il sera en effet apparent à l'homme du métier que des modifications peuvent y être apportées.

Par exemple, la clé pourrait être une clé électronique. Dans ce cas, le barillet pourrait comporter un lecteur de clé (avec ou sans contact) et la réception de la clé devrait être comprise comme la lecture de la clé par le lecteur.

En outre, la rainure pourrait être disposée sur la pièce d'activation et le pion coopérant avec la rainure pourrait être disposé sur le rotor.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

### LISTE DES RÉFÉRENCES

- Antivol: 100
- Stator: 102
- Barillet: 104
- Fente: 106
- Clé: 108
- Doigt d'entraînement: 110
- Empreinte d'indexage: 112
- Ouverture radiale du palpeur: 114
- Palpeur: 116
- Rotor: 118
- Encoche arrière: 120
- Encoche avant: 122
- Rainure: 124
- Bille d'indexage: 126
- Ressort de rappel de la bille d'indexage: 128
- Système de rappel du rotor: 130
- Levier: 132
- Système de rappel du levier: 134
- Pièce d'activation: 136
- Ouverture pour le pêne: 138
- Pion: 140

## Revendications

1. Antivol (100) pour véhicule automobile, comportant :
- un stator (102),
- un barillet (104) destiné à recevoir une clé compatible permettant au barillet (104) de tourner par rapport au stator (102) entre une première position et une seconde position,
- un rotor (118) destiné à tourner par rapport au stator (102) entre une première position et une seconde position,
- une pièce d'activation (136) d'un système de blocage d'une colonne de direction du véhicule automobile, la pièce d'activation (136) étant destinée à se déplacer entre une position de blocage dans laquelle le système de blocage bloque la colonne de direction à une position de déblocage dans laquelle le système de blocage laisse libre la colonne de direction,
le barillet (104) étant destiné, lorsqu'il tourne de sa première position à sa seconde position, à entraîner le rotor (118) de sa première position à sa seconde position,
le rotor (118) étant destiné, lorsqu'il tourne de sa première position à sa seconde position, à pousser la pièce d'activation (136) de sa position de blocage à sa position de déblocage,
l'antivol (100) étant **caractérisé en ce que** le rotor (118) est en outre destiné, lorsqu'il tourne de sa seconde position à sa première position, à pousser la pièce d'activation (136) de sa position de déblocage à sa position de blocage.

2. Antivol (100) selon la revendication 1, dans lequel le rotor (118) présente une rainure (124) délimitée par deux parois latérales (124A, 124B), dans lequel la pièce d'activation (136) présente un pion (140) inséré dans la rainure (124), et dans lequel le pion (140) est destiné, d'une part, à être poussé par la première paroi latérale (124A) de la rainure (124) pour déplacer la pièce d'activation (136) de sa position de blocage à sa position de déblocage, et, d'autre part, à être poussé par la seconde paroi latérale (124B) de la rainure (124) pour déplacer la pièce d'activation (136) de sa position de déblocage à sa position de blocage.

3. Antivol selon la revendication 1 ou 2, comportant en outre un système de rappel (130) du rotor (118) vers sa première position.

4. Antivol selon l'une quelconque des revendications 1 à 3, comportant en outre un système de retenue (116, 122, 132, 134) du rotor (118), le système de retenue (116, 122, 132, 134) étant destiné à retenir le rotor (118) dans sa seconde position lorsque le barillet (104) se déplace de sa seconde position à sa première position et qu'une clé (108) est reçue dans le barillet 104).

5. Antivol (100) selon la revendication 4, dans lequel le système de retenue (116, 122, 132, 134) comporte :
- une encoche (122) ménagée dans le rotor (118),
- un levier (132) destiné à prendre une position engagée dans l'encoche (122) pour empêcher le rotor (118) de tourner de sa seconde position à sa première position et une position désengagée de l'encoche (122) pour permettre au rotor (118) de se déplacer de sa seconde position à sa première position,
- un palpeur (116) destiné à être déplacé d'une première position à une seconde position par une clé (108), lors de l'insertion de la clé (108) dans le barillet (104), et à se déplacer de sa seconde position à sa première position lors du retrait de la clé (108) hors du barillet (104),
le palpeur (116) dans sa première position permettant au levier (132) de prendre sa position désengagée et le palpeur (116) étant destiné, lors de son déplacement de sa première position à sa seconde position, à déplacer le levier (132) en direction de sa position engagée.

6. Antivol (100) selon la revendication 5, dans lequel le système de retenue (116, 122, 132, 134) comporte en outre un système de rappel (134) du levier (132) vers sa position désengagée.

7. Antivol (100) selon l'une quelconque des revendications 4 à 6, comportant en outre un système d'indexage (112, 126, 128) destiné à maintenir le barillet (104) dans sa seconde position lorsque le rotor (118) est dans sa seconde position.

8. Antivol (100) selon l'une quelconque des revendications 1 à 7, comportant en outre un dispositif d'alimentation électrique comportant un système pour détecter lorsque le barillet (104) est dans sa première position et lorsque le barillet (104) est dans sa deuxième position, le dispositif d'alimentation électrique étant destiné à couper l'alimentation électrique d'organes électriques du véhicule automobile lorsque le barillet (104) est détecté dans sa première position et à alimenter électriquement ces organes électriques lorsque le barillet (104) est détecté dans sa seconde position.

## Patentansprüche

1. Diebstahlsicherung (100) für ein Kraftfahrzeug, umfassend:
- einen Stator (102),
- einen Schließzylinder (104), der dazu bestimmt ist, einen kompatiblen Schlüssel aufzunehmen, der es dem Schließzylinder (104) ermöglicht, sich in Bezug auf den Stator (102) zwischen einer ersten Position und einer zweiten Position zu drehen,s
- einen Rotor (118), der dazu bestimmt ist, sich in Bezug auf den Stator (102) zwischen einer ersten Position und einer zweiten Position zu drehen,
- ein Aktivierungsteil (136) für ein Sperrsystem einer Lenksäule des Kraftfahrzeugs, wobei das Aktivierungsteil (136) dazu bestimmt ist, sich zwischen einer Sperrposition, in der das Sperrsystem die Lenksäule sperrt, und einer Entsperrposition, in der das Sperrsystem die Lenksäule freigibt, zu bewegen,
wobei der Schließzylinder (104) dazu bestimmt ist, wenn er sich von seiner ersten Position in seine zweite Position dreht, den Rotor (118) von seiner ersten Position in seine zweite Position mitzunehmen,
wobei der Rotor (118) dazu bestimmt ist, wenn er sich von seiner ersten Position in seine zweite Position dreht, das Aktivierungsteil (136) von seiner Sperrposition in seine Entsperrposition zu schieben,
wobei die Diebstahlsicherung (100) **dadurch gekennzeichnet ist, dass** der Rotor (118) weiter dazu bestimmt ist, wenn er sich von seiner zweiten Position in seine erste Position dreht, das Aktivierungsteil (136) von seiner Entsperrposition in seine Sperrposition zu schieben.

2. Diebstahlsicherung (100) nach Anspruch 1, wobei der Rotor (118) eine Rille (124) aufweist, die von zwei Seitenwänden (124A, 124B) begrenzt ist, wobei das Aktivierungsteil (136) einen Stift (140) aufweist, der in die Rille (124) eingefügt ist, und wobei der Stift (140) dazu bestimmt ist, einerseits von der ersten Seitenwand (124A) der Rille (124) geschoben zu werden, um das Aktivierungsteil (136) von seiner Sperrposition in seine Entsperrposition zu bewegen, und andererseits von der zweiten Seitenwand (124B) der Rille (124) geschoben zu werden, um das Aktivierungsteil (136) von seiner Entsperrposition in seine Sperrposition zu bewegen.

3. Diebstahlsicherung nach Anspruch 1 oder 2, weiter umfassend ein Rückstellsystem (130) des Rotors (118) in seine erste Position.

4. Diebstahlsicherung nach einem der Ansprüche 1 bis 3, weiter umfassend ein Haltesystem (116, 122, 132, 134) des Rotors (118), wobei das Haltesystem (116, 122, 132, 134) dazu bestimmt ist, den Rotor (118) in seiner zweiten Position zu halten, wenn sich der Schließzylinder (104) von seiner zweiten Position in seine erste Position bewegt, und wenn ein Schlüssel (108) in dem Schließzylinder (104) aufgenommen wird.

5. Diebstahlsicherung (100) nach Anspruch 4, wobei das Haltesystem (116, 122, 132, 134) umfasst:
- eine Einkerbung (122), die in dem Rotor (118) eingerichtet ist,
- einen Hebel (132), der dazu bestimmt ist, eine Position in Eingriff mit der Einkerbung (122) einzunehmen, um den Rotor (118) daran zu hindern, sich von seiner zweiten Position in seine erste Position zu drehen, und eine von der Einkerbung (122) losgelöste Position, um dem Rotor (118) zu ermöglichen, sich von seiner zweiten Position in seine erste Position zu bewegen,
- einen Taster (116), der dazu bestimmt ist, von einer ersten Position in eine zweite Position mittels eines Schlüssels (108) bewegt zu werden, wenn der Schlüssel (108) in den Schließzylinder (104) eingefügt wird, und sich von seiner zweiten Position in seine erste Position zu bewegen, wenn der Schlüssel (108) aus dem Schließzylinder (104) herausgezogen wird,
wobei der Taster (116) in seiner ersten Position dem Hebel (132) ermöglicht, seine losgelöste Position einzunehmen, und wobei der Taster (116) dazu bestimmt ist, bei seiner Bewegung von seiner ersten Position in seine zweite Position den Hebel (132) in Richtung seiner Eingriffsposition zu bewegen.

6. Diebstahlsicherung (100) nach Anspruch 5, wobei das Haltesystem (116, 122, 132, 134) weiter ein Rückstellsystem (134) des Hebels (132) in seine losgelöste Position umfasst.

7. Diebstahlsicherung (100) nach einem der Ansprüche 4 bis 6, weiter umfassend ein Ausrichtungssystem (112, 126, 128), das dazu bestimmt ist, den Schließzylinder (104) in seiner zweiten Position festzuhalten, wenn sich der Rotor (118) in seiner zweiten Position befindet.

8. Diebstahlsicherung (100) nach einem der Ansprüche 1 bis 7, weiter umfassend eine Vorrichtung zur elektrischen Versorgung, umfassend ein System um zu erkennen, wenn sich der Schließzylinder (104) in seiner ersten Position befindet und wenn sich der Schließzylinder (104) in seiner zweiten Position befindet, wobei die Vorrichtung zur elektrischen Versorgung dazu bestimmt ist, die elektrische Versorgung elektrischer Elemente des Kraftfahrzeugs zu unterbrechen, wenn der der Schließzylinder (104) in seiner ersten Position erkannt wird, und diese elektrischen Elemente elektrisch zu versorgen, wenn der Schließzylinder (104) in seiner zweiten Position erkannt wird.

## Claims

1. An anti-theft device (100) for a motor vehicle, including:
- a stator (102),
- a cylinder barrel (104) intended to receive a compatible key allowing the cylinder barrel (104) to rotate relative to the stator (102) between a first position and a second position,
- a rotor (118) intended to rotate relative to the stator (102) between a first position and a second position,
- an activation part (136) for a blocking system of a steering column of the motor vehicle, the activation part (136) being intended to be displaced between a blocking position in which the blocking system blocks the steering column and an unblocking position in which the blocking system releases the steering column,
the cylinder barrel (104) being intended, when it rotates from its first position to its second position, to drive the rotor (118) from its first position to its second position,
the rotor (118) being intended, when it rotates from its first position to its second position, to push the activation part (136) from its blocking position to its unblocking position,
the anti-theft device (100) being **characterized in that** the rotor (118) is further intended, when it rotates from its second position to its first position, to push the activation part (136) from its unblocking position to its blocking position.

2. The anti-theft device (100) according to claim 1, wherein the rotor (118) has a groove (124) delimited by two lateral walls (124A, 124B), in which the activation part (136) has a pin (140) inserted into the groove (124), and in which the pin (140) is intended, on the one hand, to be pushed by the first lateral wall (124A) of the groove (124) to displace the activation part (136) from its blocking position to its unblocking position, and, on the other hand, to be pushed by the second lateral wall (124B) of the groove (124) to displace the activation part (136) from its unblocking position to its blocking position.

3. The anti-theft device according to claim 1 or 2, further including a return system (130) of the rotor (118) to the first position thereof.

4. The anti-theft device according to any one of claims 1 to 3, further including a retaining system (116, 122, 132, 134) of the rotor (118), the retaining system (116, 122, 132, 134) being intended to retain the rotor (118) in the second position thereof when the cylinder barrel (104) is displaced from its second position to its first position and that a key (108) is received in the cylinder barrel (104).

5. The anti-theft device (100) according to claim 4, wherein the retaining system (116, 122, 132, 134) includes:
- a notch (122) formed in the rotor (118),
- a lever (132) intended to take a position engaged in the notch (122) to prevent the rotor (118) from rotating from its second position to its first position and a position disengaged from the notch (122) to allow the rotor (118) to be displaced from its second position to its first position,
- a sensor (116) intended to be displaced from a first position to a second position by a key (108), upon the insertion of the key (108) into the cylinder barrel (104), and to be displaced from its second position to its first position upon the removal of the key (108) out of the cylinder barrel (104),
the sensor (116) in the first position thereof allowing the lever (132) to take its disengaged position and the sensor (116) being intended, upon its displacement from its first position to its second position, to displace the lever (132) towards the engaged position thereof.

6. The anti-theft device (100) according to claim 5, wherein the retaining system (116, 122, 132, 134) further includes a return system (134) of the lever (132) to the disengaged position thereof.

7. The anti-theft device (100) according to any one of claims 4 to 6, further including an indexing system (112, 126, 128) intended to hold the cylinder barrel (104) in the second position thereof when the rotor (118) is in the second position thereof.

8. The anti-theft device (100) according to any one of claims 1 to 7, further including a power supply device including a system for detecting when the cylinder barrel (104) is in the first position thereof and when the cylinder barrel (104) is in the second position thereof, the power supply device being intended to cut off the power supply of electrical members of the motor vehicle when the cylinder barrel (104) is detected in the first position thereof and to supply power to these electrical members when the cylinder barrel (104) is detected in the second position thereof.
